# EUROPÄISCHE PATENTSCHRIFT

(11) **EP 3 145 767 B1**
(45) Veröffentlichungstag und Bekanntmachung des Hinweises auf die Patenterteilung: **19.12.2018**
(21) Anmeldenummer: 15713713.4
(22) Anmeldetag: 30.03.2015
(51) Int. Cl.: B60T 8/36, B60T 8/40, B60T 8/48

(54) **SCHLUPFREGELBARE FAHRZEUGBREMSANLAGE**
SLIP-CONTROLLABLE VEHICLE BRAKE SYSTEM
SYSTÈME DE FREINAGE DE VÉHICULE À RÉGULATION ANTIPATINAGE

(30) Priorität: 19.05.2014 DE 102014209414
(43) Veröffentlichungstag der Anmeldung: 29.03.2017
(73) Patentinhaber: Robert Bosch GmbH, 70442 Stuttgart (DE)
(72) Erfinder: DRUCKENMUELLER, Heiko, 74395 Mundelsheim (DE); SCHULLER, Wolfgang, 74389 Cleebronn (DE); OEZKAN, Goekhan, 71732 Tamm (DE)
(86) Internationale Anmeldenummer: PCT/EP2015/056828
(87) Internationale Veröffentlichungsnummer: WO 2015/176855

(56) Entgegenhaltungen:
- WO-A1-94/27848
- WO-A1-2011/091849
- DE-A1- 3 844 246
- DE-A1- 10 303 251
- DE-A1-102006 013 720

## Beschreibung

### Stand der Technik

Die Erfindung betrifft eine schlupfregelbare Fahrzeugbremsanlage nach den gattungsbildenden Merkmalen des Anspruchs 1.

Eine bekannte Fahrzeugbremsanlage verfügt über einen Bremskreis, an den ein Hauptbremszylinder und eine Radbremse angeschlossen sind. Mit einer Betätigung des Hauptbremszylinders durch den Fahrer kann über eine bestehende Druckmittelverbindung ein Bremsdruck in der Radbremse aufgebaut werden. Diese Druckmittelverbindung lässt sich durch elektronische Ansteuerung eines Umschaltventils unterbrechen, so dass ein Bremsdruckaufbau in der Radbremse alternativ auch durch einen extern antreibbaren Druckerzeuger vorgenommen werden kann. Der Radbremse ist ein elektronisch ansteuerbares Druckaufbauventil vorgeschaltet, durch das ein Zufluss an Druckmittel zur Radbremse regelbar ist.

In schlupfregelbaren Fahrzeugbremsanlagen werden vielfach Hubkolbenpumpen als Druckerzeuger eingesetzt, welche von einem ansteuerbaren externen Antrieb betätigt sind. Hubkolbenpumpen haben ein zyklisches Arbeitsprinzip und erzeugen Druckpulsationen im angeschlossenen Bremskreis. Diese bestimmen das Betriebsgeräusch der Fahrzeugbremsanlage und können in den Fahrzeuginnenraum übertragen werden. Nachteiliger Weise können die Druckpulsationen auch Bauteile, wie beispielsweise ein dem Hauptbremszylinder zugeordnetes Bremspedal, zu unerwünschten Vibrationen anregen.

Zur Dämpfung von Pumpendruckpulsationen werden deshalb Druckpulsationsdämpfungseinrichtungen eingesetzt. Diese setzen sich prinzipiell aus einem Pulsationsdämpfer und einem nachgeordneten Widerstandselement zusammen. Der Pulsationsdämpfer weist wenigstens eine Dämpferkammer auf, deren Volumen druckabhängig veränderlich ist. Die Dämpferkammer wird dazu von einem elastisch verform- oder verlagerbaren Element, z.B. einer Membran, einem Balg oder einem gegen die Rückstellkraft eines elastischen Elements, z.B. einer Feder, verlagerbaren Kolben begrenzt. Das Widerstandselement kann als Festdrossel mit einem den Druckmittelstrom behindernden konstanten Strömungsquerschnitt oder als sogenannte dynamische Drossel mit einem in Abhängigkeit des vorherrschenden Drucks veränderlichen Strömungsquerschnitt ausgebildet sein.

Von Nachteil ist der relativ hohe Bauaufwand zur Darstellung der Druckpulsationsdämpfungseinrichtung, deren Bedarf an Bauraum, sowie deren Teile- und Montagekosten. Darüber hinaus beeinflusst die einmal festgelegte konstruktive Auslegung einer Druckpulsationsdämpfungseinrichtung die Dynamik, mit welcher ein Bremsdruckaufbau in der Fahrzeugbremsanlage erfolgt und lässt sich nicht ohne Weiteres an sich verändernde Umgebungsbedingungen der Fahrzeugbremsanlage, wie z.B. an steigende oder fallende Umgebungstemperatur oder Viskosität des Druckmittels, anpassen. Der Wirkungsbereich einer Druckpulsationsdämpfungseinrichtung hängt insofern von den an der Fahrzeugbremsanlage vorherrschenden Betriebsbedingungen ab bzw. das gesamte Potenzial einer Druckpulsationsdämpfungseinrichtung wird lediglich in begrenztem Umfang ausgenutzt.

Der Fahrzeugbremsanlage nach den Merkmalen des Anspruchs 1 kommt die aus der WO2011/091849 A1 bekannte Fahrzeugbremsanlage am Nächsten.

Von diesem Stand der Technik unterscheidet sich die Erfindung unter anderem dadurch, dass die Druckkammer des Pulsationsdämpfers einer Druckpulsationsdämpfungseinrichtung in ihrem Volumen druckabhängig veränderbar ist und dass der Strömungsquerschnitt eines Widerstandselements dieser Druckpulsationsdämpfungseinrichtung durch eine daran angepasste elektronische Ansteuerung des Druckaufbauventils eingestellt ist. Beim nächstkommenden Stand der Technik ist das Druckaufbauventil zwar ebenfalls regelbar ausgeführt, ist jedoch nicht an einer Glättung des Volumenstroms der Pumpe beteiligt. Eine Glättung dieses Volumenstroms wird hier vielmehr der durch eine periodische Modulation des Spulenstroms zur Betätigung des Umschaltventils (Trennventils) durchgeführt. Während eines Pulsationsdämpfungsvorgangs befindet sich das Umschaltventil nicht in der Sperrstellung.

### Vorteile der Erfindung

Die Erfindung nach den Merkmalen des Anspruchs 1 weist demgegenüber den Vorteil auf, dass sich die Eigenschaften einer Druckpulsationsdämpfungseinrichtung an die augenblicklichen Betriebsbedingungen der Fahrzeugbremsanlage anpassen lassen, ohne dazu einen baulichen Mehraufwand zu erfordern. Die Erfindung erlaubt vielmehr im Gegenteil dazu eine Einsparung von Bauteilen, Bauraum, Teile- und Montagekosten.

Die Drosselfunktion einer Druckpulsationsdämpfungseinrichtung wird erfindungsgemäß von einem elektronisch ansteuerbaren Druckaufbauventil übernommen, das als Stetigventil ausgebildet ist und dadurch zwischen einer Durchlassstellung und einer Sperrstellung eine unbegrenzte Anzahl von Zwischenstellungen einnehmen kann. Diese Zwischenstellungen sind durch entsprechende Ansteuersignale an dem Druckaufbauventil gezielt einstellbar, so dass die Drosselwirkung der Druckpulsationsdämpfungseinrichtung an die jeweiligen Betriebsbedingungen der Fahrzeugbremsanlage angepasst werden kann. Beispielsweise lässt sich die Drosselwirkung ganz unterdrücken, wenn z.B. bei tiefer Umgebungstemperatur die kinematische Viskosität der Bremsflüssigkeit allzu stark sinkt. Durch die Veränderbarkeit der Drosseleigenschaften kann die Druckaufbaudynamik, also die Zeitdauer bis zum Aufbau eines gewünschten Bremsdrucks in der Fahrzeugbremsanlage, beeinflusst und an die jeweiligen Erfordernisse des Bremsvorgangs, z.B. Standardbremsvorgang oder Bremsvorgang zur Vermeidung einer Kollision mit anderen Verkehrsteilnehmern, angepasst werden. Durch die Erfindung lassen sich unterschiedliche Drosselkennlinien bzw. Druckabfall-Kennlinien realisieren und die Geräuschdämpfungsmöglichkeiten einer Druckpulsationsdämpfungseinrichtung optimieren.

Weitere Vorteile oder vorteilhafte Weiterbildungen der Erfindung ergeben sich aus den Unteransprüchen und/oder aus der nachfolgenden Beschreibung.

### Zeichnung

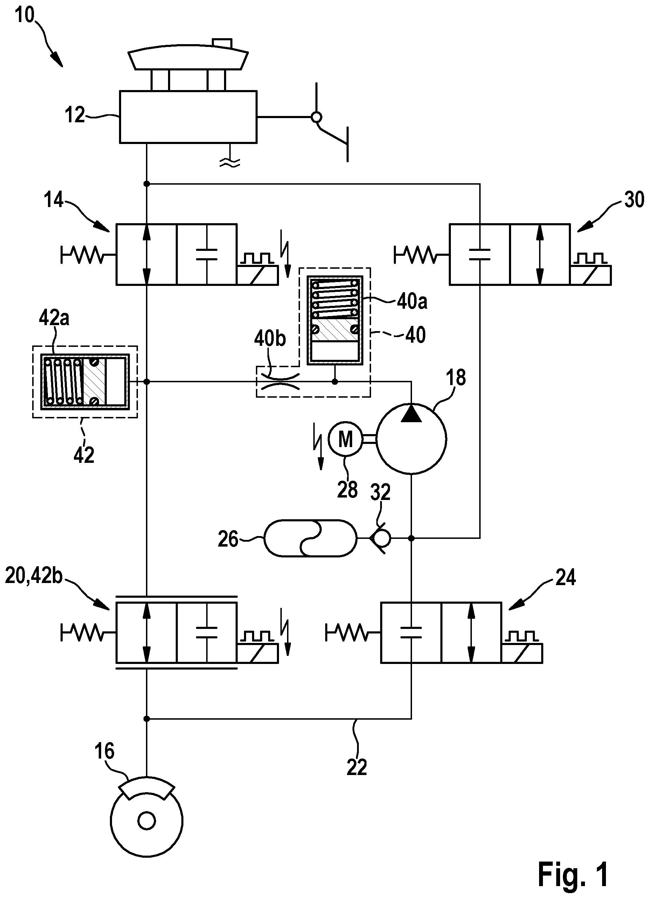

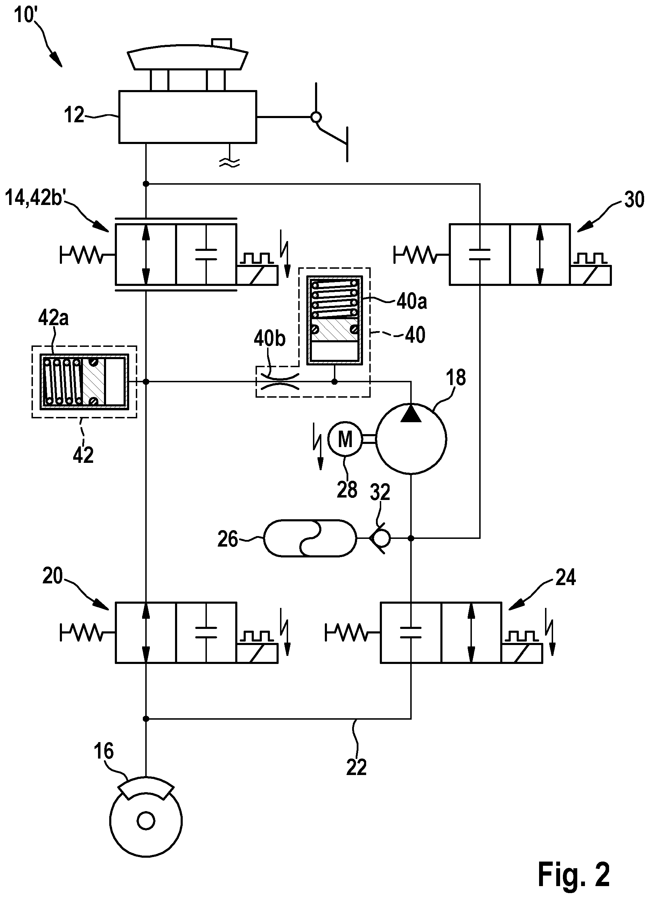

Ein Ausführungsbeispiel der Erfindung ist in Figur 1 der Zeichnung dargestellt und in der nachfolgenden Beschreibung detailliert erläutert.
Figur 1 zeigt ein Ausführungsbeispiel eines erfindungsgemäß modifizierten Bremskreises einer schlupfregelbaren Fahrzeugbremsanlage, anhand von Schaltsymbolen.
Der Bremskreis nach Figur 2 zählt zum Stand der Technik.

### Beschreibung

Der in Figur 1 dargestellte Bremskreis 10 einer schlupfregelbaren Fahrzeugbremsanlage ist an einen vom Fahrer des Fahrzeugs betätigbaren Hauptbremszylinder 12 angeschlossen. Er umfasst ein Umschaltventil 14, das eine Druckmittelverbindung vom Hauptbremszylinder 12 zu einer Radbremse 16 des Bremskreises 10 steuert. Bei betätigtem Hauptbremszylinder 12 und geöffnetem Umschaltventil 14 ist ein Bremsdruckaufbau in der Radbremse 16 durch Muskelkraft des Fahrers möglich, während die Verbindung des Fahrers mit der Radbremse 16 durch sperren des Umschaltventils 14 unterbrochen werden kann, um alternativ den Bremsdruck durch Fremdkraft zu erzeugen. Mit der Druckmittelverbindung vom Hauptbremszylinder 12 zur Radbremse 16 ist ein extern antreibbarer Druckerzeuger 18 auslass- bzw. druckseitig kontaktiert. Dieser Druckerzeuger 18 versorgt die Radbremse 16 mit Druckmittel, wobei zur Regelung des Bremsdrucks der Radbremse 16 unter anderem ein Druckaufbauventil 20 vorgeschalten ist.

Unmittelbar stromaufwärts der Radbremse 16 zweigt ein Rücklauf 22 aus der Druckmittelverbindung ab. Dieser ist mit einem Druckabsenkventil 24 versehen, um bei Bedarf, d.h. einer drohenden Blockiergefahr des zugeordneten Rades, einen Druckmittelabfluss aus der Radbremse 16, zwecks Absenkung des Bremsdrucks, zu steuern. Abfließendes Druckmittel gelangt in einen, dem Druckabsenkventil 24 nachgeordneten Pufferspeicher 26, welcher das Druckmittel während des Anlaufs des Druckerzeugers 18 puffert. Nach erfolgtem Anlaufen des Druckerzeugers 18 saugt dieser das Druckmittel wieder aus dem Pufferspeicher 26 ab.

Zudem ist der Druckerzeuger 18 über einen separaten Leitungsstrang mit dem Hauptbremszylinder verbunden. Dieser Leitungsstrang weist ein Hochdruckschaltventil 30 zur Steuerung der Verbindung auf. Für einen Aufbau von Bremsdruck saugt der Druckerzeuger 18 Druckmittel aus dem Hauptbremszylinder 12 an.
Um zu verhindern, dass Druckmittel aus dem Leitungsstrang stromabwärts des Hochdruckschaltventils 30 in den Pufferspeicher 26 gelangt, ist ein Rückschlagventil 32 vorgesehen, das eine Durchströmung mit Druckmittel vom Pufferspeicher 26 zur Saugseite des Druckerzeugers 18 ermöglicht, die Gegenrichtung dazu jedoch sperrt und somit eine Verbindung des Leitungsstrangs vom Hauptbremszylinder 12 zum Pufferspeicher 26 unterbricht.

Wie bereits einleitend erwähnt, werden als Druckerzeuger 18 üblicher Weise Hubkolbenpumpen eingesetzt. Deren zyklisches Förderprinzip verursacht Vibrationen und Druckwellen bzw. Pulsationen im Bremskreis 10 und letztlich ein im Fahrzeuginnenraum störend wahrnehmbares Betriebsgeräusch.
Zur Dämpfung dieser Pulsationen werden im Bremskreis 10
Druckpulsationsdämpfungseinrichtungen 40, 42 eingesetzt. Eine erste Druckpulsationsdämpfungseinrichtung 40, zur Dämpfung von Druckpulsationen in einem niedrigen Druckbereich bis zu einem festgelegten Druckgrenzwert, ist unmittelbar stromabwärts des Druckerzeugers 18 angeordnet. Zwischen dem Umschaltventil 14 und dem Druckaufbauventil 20 befindet sich eine zweite Druckpulsationsdämpfungseinrichtung 42, welche zur Dämpfung von Druckpulsationen oberhalb vom diesem festgelegten Druckgrenzwert vorgesehen ist.

Prinzipiell umfassen Druckpulsationsdämpfungseinrichtungen 40, 42 einen Pulsationsdämpfer 40a mit einer in ihrem Volumen druckabhängig veränderbaren Dämpfungskammer und ein dem Pulsationsdämpfer 40a in Strömungsrichtung nachgeordnetes Widerstandselement 40b. Letzteres drosselt einen Abfluss von Druckmittel aus dem Druckpulsationsdämpfer 40a und stellt der Druckmittelströmung, je nach Ausführung, einen vom Druck des Druckmittels unabhängigen, konstanten Widerstand oder einen druckabhängig veränderlichen Widerstand entgegen. Als Pulsationsdämpfer 40a sind beispielsweise Membrandämpfer mit einer die volumenveränderliche Druckkammer begrenzenden elastischen Membran, Balgdämpfer mit einem elastisch verformbaren Balg oder Kolbendämpfer mit einem entgegen der Rückstellkraft eines elastischen Elements betätigbaren Kolben, einsetzbar.

Erfindungsgemäß ist der Bremskreis nach Figur 1 unter anderem mit einem als Stetigventil ausgebildeten Druckaufbauventil 20 ausgestattet, was anhand die beiden Parallelen entlang der Längsseiten des entsprechenden Schaltsymbols gekennzeichnet ist. Stetigventile unterscheiden sich von konventionellen Schaltventilen dadurch, dass sie zwischen einer Durchlassstellung und einer Sperrstellung eine unbegrenzte Anzahl von Zwischenstellungen einnehmen und damit die Wirkung einer Drossel bzw. eines Widerstandselements im Druckmittelstrom übernehmen können. Diese verschiedenen Zwischenstellungen lassen sich durch entsprechend angepasste elektronische Ansteuersignale an das Druckaufbauventil 20 gezielt einstellen und können damit an sich ändernde Betriebszustände und/oder Umgebungsbedingungen der Fahrzeugbremsanlage individuell angepasst werden.

Durch Vorsehen eines als Stetigventil ausgebildeten Druckaufbauventils 20 wird die Drosselwirkung des Widerstandselements 42b der Pulsationsdämpfungseinrichtung 42 vom Druckaufbauventil 20 übernommen und es kann auf den Einsatz eines Widerstandselements in Form einer mechanischen Drossel verzichtet werden. Neben den Teilekosten einer mechanischen Drossel lassen sich die Kosten für deren Montage einsparen. Die Erfindung schlägt also vor, ein konventionell mechanisch ausgeführtes Widerstandselement 42b der Druckpulsationsdämpfungseinrichtung 42 durch eine angepasste elektronische Ansteuerung eines stetig steuerbaren Druckaufbauventils 20 und somit durch eine elektronische Lösung zu ersetzen.

Anhand der Blitzsymbole in Figur 1 ist die elektronische Ansteuerung der Bauelemente des Bremskreises 10 zum Zeitpunkt wirksamer Dämpfungsmaßnahmen veranschaulicht. Wenn also durch elektrische Ansteuerung seines Antriebs 28 der Druckerzeuger 18 betätigt wird und dadurch Druckmittel unter Ausbildung von Druckpulsationen fördert, wird gleichzeitig das in Form eines Schaltventils ausgebildete Umschaltventil 14 elektronisch angesteuert und in seine Sperrstellung umgeschaltet. Verhindert wird damit die Ausbreitung von Druckpulsationen in Richtung des Hauptbremszylinders 12. Weiterhin wird das stetig steuerbare Druckaufbauventil 20 mit einem Ansteuersignal beaufschlagt, welches von einem elektronischen Steuergerät derart adaptiert wurde, dass das Druckaufbauventil 20 einerseits eine Anpassung des Drucks in der Radbremse 16 an die am zugeordneten Rad vorherrschende Schlupfverhältnisse und andererseits eine Drosselung des der Radbremse 16 zuströmenden Druckmittelstroms im Rahmen seiner Funktion als Widerstandselement 42b einer Druckpulsationsdämpfungsvorrichtung 42 erfolgt.

Durch eine elektrisch gesteuerte Androsselung des Druckmittelstroms zur Radbremse werden im Hochdruckbereich des Bremskreises 10 durch den Betrieb des Druckerzeugers 18 hervorgerufene Pulsationen wirksam gedämpft und das Geräuschverhalten der Fahrzeugbremsanlage deutlich verbessert.

Der aus dem Stand der Technik bekannte Bremskreis nach Figur 2 ist mit wenigen Ausnahmen gleichartig zum Ausführungsbeispiel nach Figur 1 ausgebildet. Einander entsprechende Bauelemente der Bremskreise sind daher mit einheitlichen Bezugszeichen versehen. Der Bremskreis 10' nach Figur 2 unterscheidet sich insbesondere darin, dass anstelle eines als Stetigventil ausgebildeten Druckaufbauventils 20 nunmehr ein konventionelles Schaltventil eingesetzt wird, während das Umschaltventil 14 neuerdings nicht mehr als Schaltventil, sondern als Stetigventil, dargestellt anhand von Parallelen entlang den Längsseiten des Symbols, ausgeführt ist und eine unbegrenzte Anzahl von Zwischenstellungen einnehmen kann.

Mit einem als Stetigventil ausgebildeten Umschaltventil 14 wird die Drosselfunktion des Widerstandselements 42b' einer Druckpulsationsdämpfungseinrichtung 42 nunmehr auf das Umschaltventil 14 übertragen, das folglich Druckpulsationen in einem Pfad zum Hauptbremszylinder 12 dämpft. Auch durch eine Bedämpfung dieses Hauptbremszylinderpfads kann das Betriebsgeräusch der Fahrzeugbremsanlage gesenkt werden und vor allem treten am Pedal des Hauptbremszylinders 12 keine oder zumindest deutlich abgeschwächte Vibrationen auf.

Um die Dämpfungswirkung zu erzielen, wird bei angesteuertem Antrieb bzw. förderndem Druckerzeuger 18, symbolisiert anhand eines Blitzsymbols, auch das Druckaufbauventil 20 elektronisch angesteuert. Dieses schaltet daraufhin in seine Sperrstellung um. Weiterhin erfolgt eine elektronische Ansteuerung des Druckabsenkventils 24, welches dadurch in Durchlassstellung umgeschaltet wird.
Die beschriebene zweite Druckpulsationsdämpfungseinrichtung 42 kann wahlweise ohne erste Druckpulsationsdämpfungseinheit 40 oder in Serie mit z.B. einer ersten Druckpulsationsdämpfungseinrichtung 40 betrieben werden, welche einem Auslass des Druckerzeugers 18 unmittelbar nachgeschaltet ist. Die erste Druckpulsationsdämpfungseinrichtung 40 ist vorteilhafter Weise auf eine Dämpfung von Druckpulsationen ausgelegt, die bei relativ niedrigen Drücken des Druckerzeugers, das heißt bis zum festgelegten Druckgrenzwert, auftreten und kann daher auch als Niederdruckpulsationsdämpfungseinrichtung bezeichnet werden.

Eine Anpassung der ersten Druckpulsationsdämpfungseinrichtung 40 an die niedrigere zu dämpfenden Bremsdrücke erfolgt unter anderem durch schwächer dimensionierte elastische Elemente (Membran, Balg, Rückstellelement) und ein Widerstandselement 40b mit größerem Strömungsquerschnitt. Dessen Abmessungen sind auf die Auslegung der elastischen Elemente abgestimmt.

Selbstverständlich sind Änderungen oder Ergänzungen möglich, ohne vom Grundgedanken der Erfindung abzuweichen.

## Patentansprüche

1. Schlupfregelbare Fahrzeugbremsanlage mit einem Bremskreis (10),
der ausgestattet ist mit wenigstens
einer Radbremse (16),
einem Druckerzeuger (18),
einem Druckaufbauventil (20) zur Versorgung der Radbremse (16) mit einem Druckmittel,
einem Umschaltventil (14) zur Steuerung einer Druckmittelverbindung des Bremskreises mit einem Hauptbremszylinder (12) der Fahrzeugbremsanlage und mit einem elektronischen Steuergerät zur Steuerung des Umschaltventils (14), des Druckaufbauventils (20) und des Druckerzeugers (18), zur Anpassung des Drucks in der Radbremse (16) an die am zugeordneten Rad vorherrschenden Schlupfverhältnisse,
wobei eine Druckpulsationsdämpfungseinrichtung (42) stromabwärts des Druckerzeugers (18), zwischen dem Druckerzeuger (18) und der Radbremse (16) vorgesehen ist,
welche einen Pulsationsdämpfer (42a) mit einer Druckkammer und
ein dem Pulsationsdämpfer (42a) in Strömungsrichtung nachgeordnetes Widerstandselement (42b) mit einem eine Druckmittelströmung behindernden Strömungsquerschnitt aufweist,
wobei das Druckaufbauventil (20) als Stetigventil ausgebildet ist,
das durch elektronische Ansteuerung über eine unbegrenzte Anzahl von Zwischenstellungen aus einer Durchlassstellung in eine Sperrstellung umsteuerbar ist und
wobei das Umschaltventil (14) als ein Schaltventil ausgebildet ist,
**dadurch gekennzeichnet,**
**dass** die Druckkammer des Plusationsdämpfers (42a) in ihrem Volumen druckabhängig veränderbar ist,
**dass** durch eine angepasste elektronische Ansteuerung des Druckaufbauventils (20) der Strömungsquerschnitt des Widerstandselements (42b) derart eingestellt ist, dass eine Androsselung des Druckmittelstroms zur Radbremse (16) erfolgt und die Druckpulsationsdämpfungseinrichtung (42) durch den Betrieb des Druckerzeugers (18) hervorgerufene Pulsationen dämpft und
**dass** zum Zeitpunkt der Ansteuerung des Druckaufbauventils (20) zur Ausbildung des die Druckmittelströmung behindernden Strömungsquerschnitts, das Umschaltventil (14) seine Sperrstellung einnimmt.

2. Schlupfregelbare Fahrzeugbremsanlage nach Anspruch 1,
**dadurch gekennzeichnet,**
**dass** der Pulsationsdämpfer (42a) zwischen dem Umschaltventil (14) und dem Druckaufbauventil (20) des Bremskreises (10) angeordnet ist.

## Claims

1. Slip-controllable vehicle brake system having a brake circuit (10) which is equipped with at least one wheel brake (16), a pressure generator (18), a pressure build-up valve (20) for supplying the wheel brake (16) with a pressure medium, a switchover valve (14) for controlling a pressure medium connection of the brake circuit to a brake master cylinder (12) of the vehicle brake system and having an electronic control unit for controlling the switchover valve (14), the pressure build-up valve (20) and the pressure generator (18), for the adaptation of the pressure in the wheel brake (16) to the slip conditions which prevail at the associated wheel, wherein a pressure pulsation damping device (42) is provided downstream of the pressure generator (18), between the pressure generator (18) and the wheel brake (16), which pressure pulsation damping device has a pulsation damper (42a) with a damper chamber and a resistance element (42b), arranged downstream of the pulsation damper (42a) in flow direction, with a flow cross section which impedes a pressure medium flow, wherein the pressure build-up valve (20) is configured as a continuously adjustable valve which can be changed over in a controlled manner from an open position into a shut-off position via an unlimited number of intermediate positions by way of electronic actuation, and wherein the switchover valve (14) is configured as a switching valve, **characterized in that** the volume of the pressure chamber of the pulsation damper (42a) can be varied in a pressure-dependent manner, **in that** the flow cross section of the resistance element (42b) is set by way of an adapted electronic actuation of the pressure build-up valve (20) in such a way that throttling of the pressure medium flow to the wheel brake (16) takes place and the pressure pulsation damping device (42) damps pulses which are brought about by way of the operation of the pressure generator (18), and **in that**, at the time of the actuation of the pressure build-up valve (20) for configuring the flow cross section which impedes the pressure medium flow, the switchover valve (14) assumes its shut-off position.

2. Slip-controllable vehicle brake system according to Claim 1, **characterized in that** the pulsation damper (42a) is arranged between the switchover valve (14) and the pressure build-up valve (20) of the brake circuit (10).

## Revendications

1. Système de freinage de véhicule à régulation antipatinage, comprenant un circuit de freinage (10) qui est équipé d'au moins
un frein de roue (16),
d'un générateur de pression (18),
d'une soupape de montée en pression (20) servant à l'alimentation du frein de roue (16) en fluide sous pression,
d'une soupape d'inversion (14) servant à la commande d'une liaison de fluide sous pression du circuit de freinage avec un maître-cylindre de frein (12) du système de freinage de véhicule et comprenant un appareil de commande électronique servant à la commande de la soupape d'inversion (14), de la soupape de montée en pression (20) et du générateur de pression (18), pour adapter la pression dans le frein de roue (16) aux taux de patinage régnant au niveau de la roue associée,
un dispositif d'amortissement de pulsations de pression (42) étant disposé en aval du générateur de pression (18), entre le générateur de pression (18) et le frein de roue (16)',
lequel dispositif d'amortissement de pulsations de pression comprend un amortisseur de pulsations (42a) doté d'une chambre de pression et un élément de résistance (42b) placé en aval de l'amortisseur de pulsations (42a) dans le sens d'écoulement et présentant une section transversale d'écoulement entravant un écoulement de fluide sous pression, la soupape de montée en pression (20) étant réalisée sous forme de soupape à commande continue qui peut être commutée au moyen d'une commande électronique, en passant par un nombre illimité de positions intermédiaires, d'une position de passage à une position de blocage et
la soupape d'inversion (14) étant réalisée sous forme de soupape de commutation,
**caractérisé**
**en ce que** le volume de la chambre de pression de l'amortisseur de pulsations (42a) peut être modifié en fonction de la pression,
**en ce que** la section transversale d'écoulement de l'élément de résistance (42b) est réglée au moyen d'une commande électronique adaptée de la soupape de montée en pression (20) de telle sorte qu'un étranglement du flux de fluide sous pression vers le frein de roue (16) ait lieu et que le dispositif d'amortissement de pulsations de pression (42) amortisse les pulsations provoquées par le fonctionnement du générateur de pression (18) et en ce qu'à l'instant de la commande de la soupape de montée en pression (20) pour former la section transversale d'écoulement entravant l'écoulement de fluide sous pression, la soupape d'inversion (14) adopte sa position de blocage.

2. Système de freinage de véhicule à régulation antipatinage selon la revendication 1,
**caractérisé**
**en ce que** l'amortisseur de pulsations (42a) est disposé entre la soupape d'inversion (14) et la soupape de montée en pression (20) du circuit de freinage (10).
